# EUROPEAN PATENT APPLICATION

(11) **EP 2 858 283 A1**
(43) Date of publication of application: **08.04.2015**
(21) Application number: 12877333.0
(22) Date of filing: 15.10.2012
(51) Int. Cl.: H04L 1/00

(54) **CODE MODULATION AND DEMODULATION METHODS AND APPARATUSES FOR HIGH ORDER MODULATION**

(30) Priority: 25.05.2012 CN 201210166591
(71) Applicant: Huawei Technologies Co., Ltd., Longgang District Shenzhen, Guangdong 518129 (CN)
(72) Inventor: WANG, Guangjian, Shenzhen Guangdong 518129 (CN); ZENG, Yanxing, Shenzhen Guangdong 518129 (CN); LIU, Kunpeng, Shenzhen Guangdong 518129 (CN)
(74) Representative: Isarpatent
(86) International application number: PCT/CN2012/082966
(87) International publication number: WO 2013/174093

(57) **Abstract**

Disclosed are a code modulation method and apparatus for high order modulation. The method comprises: converting information that needs to be transmitted into a bit data stream, and demultiplexing the bit data stream into more than one channel of bit data stream; performing first-type coding on at least one channel of bit data stream in the more than one channel of stream, to obtain first output data; performing second-type coding on at least one channel of the remaining channels of bit data stream on which the first-type coding is not performed, to obtain second output data; and performing quadrature amplitude modulation on the first output data, to generate a modulation symbol for output. Compared with the prior art, the correctness rate of demodulation in the technical solution is improved significantly, achieving higher transmission efficiency.

## Description

This application claims priority to Chinese patent application No. 201210166591.0 titled "CODE MODULATION AND DEMODULATION METHOD AND APPARATUS FOR HIGH ORDER MODULATION" and filed with the State Intellectual Property Office on May 25, 2012, which is incorporated herein by reference in its entirety.

### FIELD OF TECHNOLOGY

The present disclosure relates to the field of communication technology, and in particular to code modulation and demodulation methods and apparatuses for a high order modulation in a communication system.

### BACKGROUND OF THE INVENTION

With the increasing requirement to the transmission rate and the spectral efficiency in a communication system, a mode of Quadrature Amplitude Modulation (QAM) with a higher order is adopted to the communication system to meet the requirement to the transmission rate and the spectral efficiency.

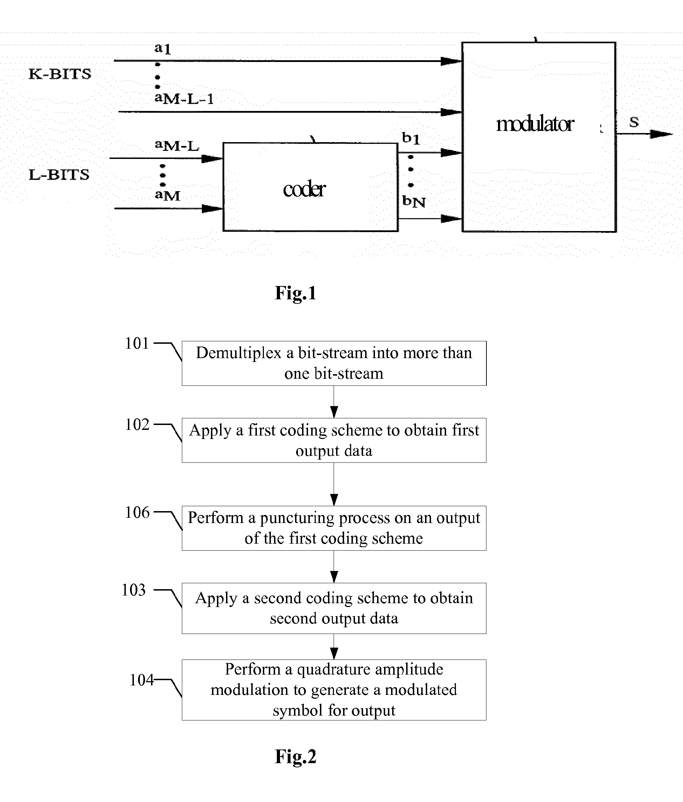

In the conventional technology, a solution of multilayer code modulation is proposed, in which, a bit-stream to be transmitted is demultiplexed into parallel sub-streams, the sub-streams are channel-coded, and then a symbol-mapping is performed on each of the coded bit sub-streams to generate a symbol-stream. Based on this solution, many solutions of engineering feasibility are proposed in the conventional technology from the perspective of feasibility and improvement in spectral efficiency. In a most common solution, after a bit-stream to be transmitted is demultiplexed, one of the parallel bit-streams is channel-coded, while other bit-streams are not channel-coded. For example, as shown in Fig. 1, assuming there are multiple bit-streams a₁ to a_{M}, the bit-streams a₁ to a_{M-L-1} are not coded while the bit-streams a_{M-L} to a_{M} are coded to generate coded bit-streams b₁ to b_{N}, and then the bit-streams a₁ to a_{M-L-1} and the coded bit-streams b₁ to b_{N} are input into a modulator to be modulated into symbols for output.

In a communication system in which the conventional technology is applied, a large amount of burst errors or random errors may occur in a certain non-linear transmission channel or in an occasion of continuous burst errors, resulting in a worsen code error rate (or frame error rate) and affecting the system performance.

### SUMMARY OF THE INVENTION

According to embodiments of the disclosure, there are provided high order modulation and demodulation methods and apparatuses applicable to a communication system, to overcome the burst errors or random errors in the existing communication system.

According to the embodiments of the disclosure, there is provided a code modulation method for a high order modulation in a communication system, including:
converting information to be transmitted into a bit-stream, and demultiplexing the bit-stream into more than one bit-stream;
applying a first coding scheme to at least one of the more than one bit-stream to obtain first output data, and applying a second coding scheme to at least one of the bit-streams that are not subjected to the first coding scheme to obtain second output data; and
performing a quadrature amplitude modulation on the first output data and the second output data, to generate a modulated symbol for output.

According to the embodiments of the disclosure, there is further provided a demodulation method for a high order modulation in a communication system, including:
receiving a modulated symbol representing transmitted information and performing a demodulation judgment on the modulated symbol;
applying a first decoding scheme to an output of the demodulation judgment, to obtain bit information corresponding to a first coding scheme;
applying a second decoding scheme to the output of the demodulation judgment, to obtain bit information corresponding to a second coding scheme;
performing a time delay process on the received modulated symbol; and
performing, in accordance with a minimum distance criterion for demodulation, a symbol judgment on the obtained bit information corresponding to the first coding scheme, the obtained bit information corresponding to the second coding scheme and the result of the time delay process, to determine bit information corresponding to neither the first coding scheme nor the second coding scheme.

According to the embodiments of the disclosure, there is further provided a demodulation method for a high order modulation in a communication system, including:
receiving a modulated symbol representing transmitted information and performing a demodulation judgment on the modulated symbol;
applying a first decoding scheme to an output of the demodulation judgment, to obtain bit information corresponding to a first coding scheme; and
applying a second decoding scheme to the output of the demodulation judgment, to obtain bit information corresponding to a second coding scheme.

According to the embodiments of the disclosure, there is further provided a code modulation apparatus for a high order modulation in a communication system, including a converting unit, a demultiplexing unit, a first-scheme coding unit, a second-scheme coding unit and a modulating unit; wherein
the converting unit is configured to convert information to be transmitted into a bit-stream;
the demultiplexing unit is configured to demultiplex the bit-stream into more than one bit-stream;
the first-scheme coding unit is configured to apply a first coding scheme to at least one of the more than one bit-stream to obtain first output data;
the second-scheme coding unit is configured to apply a second coding scheme to at least one of the bit-streams that are not subjected to the first coding scheme, to obtain second output data; and
the modulating unit is configured to perform a quadrature amplitude modulation on the first output data and the second output data, to generate a modulated symbol for output.

According to the embodiments of the disclosure, there is further provided a demodulation apparatus for a high order modulation in a communication system, including a receiving unit, a demodulating unit, a first-scheme decoding unit, a second-scheme decoding unit, a time delay unit, and a judging unit; where
the receiving unit is configured to receive a modulated symbol representing transmitted information;
the demodulating unit is configured to perform a demodulation judgment on the modulated symbol;
the first-scheme decoding unit is configured to apply a first decoding scheme to an output of the modulation judgment, to obtain bit information corresponding to a first coding scheme;
the second-scheme decoding unit is configured to apply a second decoding scheme to the output of the modulation judgment, to obtain bit information corresponding to a second coding scheme;
the time delay unit is configured to perform a time delay process on the input symbol; and
the judging unit is configured to perform, in accordance with a minimum distance criterion for demodulation, a symbol judgment on the obtained bit information corresponding to the first coding scheme, the obtained bit information corresponding to the second coding scheme and the result of the time delay process, to determine the bit information corresponding to neither the first coding scheme nor the second coding scheme.

According to the embodiments of the disclosure, there is further provided a demodulation apparatus for a high order modulation in a communication system, including a receiving unit, a demodulating unit, a first-scheme decoding unit, and a second-scheme decoding unit; where
the receiving unit is configured to receive a modulated symbol representing transmitted information;
the demodulating unit is configured to perform a demodulation judgment on the modulated symbol;
the first-scheme decoding unit is configured to apply a first decoding scheme to an output of the modulation judgment, to obtain bit information corresponding to a first coding scheme; and
the second-scheme decoding unit is configured to apply a second decoding scheme to an output of the modulation judgment, to obtain bit information corresponding to a second coding scheme.

According to the above technical solutions, the second coding scheme is applied to some or all of the bit-streams that are not subjected to the first coding scheme. The second coding scheme has a better performance on correcting burst errors and random errors and is a channel coding scheme having a low complexity and a high efficiency for realization. Therefore, compared with the conventional technology, the method has much higher correctness rate of demodulation and transmission efficiency.

### BRIEF DESCRIPTION OF THE DRAWINGS

The drawings illustrating the embodiments or the conventional technology will be described briefly as follows, so that the technical solutions according to the embodiments of the present disclosure or according to the conventional technology will become clearer. It is obvious that the drawings described below only illustrate a few embodiments of the present disclosure. For those skilled in the art, other drawings may be obtained according to these drawings without any creative work.
Fig. 1 is a simplified schematic diagram of a modulation process in the conventional technology;
Fig. 2 is a simplified flowchart of a code modulation method for a high order modulation in a communication system according to a first embodiment of the disclosure;
Fig. 3 is a simplified flowchart of a code modulation method for a high order modulation in a communication system according to a second embodiment of the disclosure;
Fig. 4 is a simplified schematic diagram of a modulation process according to embodiments of the disclosure;
Fig. 5 is a simplified flowchart of a code modulation method for a high order modulation in a communication system according to a third embodiment of the disclosure;
Fig. 6 is a simplified flowchart of a demodulation method for a high order modulation in a communication system according to a fourth embodiment of the disclosure;
Fig. 7 is a schematic diagram of a demodulation apparatus according to the fourth embodiment;
Fig. 8 is a 64QAM constellation for explaining a demodulation process;
Fig. 9 is a simplified flowchart of a demodulation method for a high order modulation in a communication system according to a fifth embodiment of the disclosure;
Fig. 10a is a simplified schematic diagram showing a user device according to a sixth embodiment of the disclosure;
Fig. 10b is a simplified schematic diagram of a code modulation apparatus for a high order modulation in a communication system according to the sixth embodiment of the disclosure;
Fig. 11 is a simplified schematic diagram of a demodulation apparatus for a high order modulation in a communication system according to a seventh embodiment of the disclosure; and
Fig. 12 is a simplified schematic diagram of a demodulation apparatus for a high order modulation in a communication system according to an eighth embodiment of the disclosure.

### DETAILED DESCRIPTION OF THE INVENTION

### First Embodiment

There is provided a code modulation method for a high order modulation in a communication system according to the present embodiment of the disclosure. As shown in Fig. 2, the method applied to the communication system includes steps 101 to 106 as follows.

In step 101, information to be transmitted is converted into a bit-stream, and the bit-stream is demultiplexed into more than one bit-stream.

In step 102, a first coding scheme is applied to at least one of the more than one bit-stream to obtain first output data.

Specifically, the first coding scheme in step 102 may be, for example, the Low Density Parity Check (LDPC, Low Density Parity Check) coding, the convolutional coding, the Polar coding, the Turbo coding, the generalized concatenated coding, or the product coding. The applicable coding schemes are not listed exhaustively herein, and any other advanced coding scheme with high performance may be adopted. If the LDPC coding is adopted and the coding rate of a LDPC coder is 3/4, at least three bit-streams are needed. The well known technologies may be referred to for the operation of the first coding scheme such as the LDPC coding.

In step 103, a second coding scheme is applied to at least one of the remaining bit-streams that are not subjected to the first coding scheme, to obtain second output data.

Specifically, the second coding scheme in step 103 is cyclic coding, which may at least include the Boss-Chaudhuri-Hocquenghem (BCH) coding, and/or the Reed-Solomon (RS) coding, and/or other types of cyclic coding, or other types of coding with low complexity and high efficiency for correcting burst errors. If the BCH coding is adopted, at least one input bit-stream is needed; and if the RS coding is adopted, at least four input bit-streams are needed.

In the case that in step 103 the second coding scheme is applied to all of the remaining bit-streams that are not subjected to the first coding scheme, the bit-streams obtained from the demultiplexing are divided into two groups: one group is subjected to the first coding scheme and the other group is subjected to the second coding scheme. A high order modulation is performed on the bit-streams that are subjected to either the first coding scheme or the second coding scheme.

In step 104, a quadrature amplitude modulation is performed on the first output data and the second output data, to generate a modulated symbol for output.

In the method according to the first embodiment of the disclosure, the second coding scheme is applied to some or all of the bit-streams that are not subjected to the first coding scheme. The second coding scheme has a better performance on correcting burst errors and random errors and the second coding scheme is a channel coding scheme having low complexity, high efficiency and convenient realization. Therefore, compared with the conventional technology, the method has much higher correctness rate of demodulation and transmission efficiency.

Preferably, if the more than one bit-stream obtained from the demultiplexing comprises any bit stream that is subjected to neither the first coding scheme nor the second coding scheme, the method further includes step 105 and step 106 as follows.

In step 105, a quadrature amplitude modulation is performed on the first output data, the second output data and the bit-stream that is subjected to neither the first coding scheme nor the second coding scheme, to generate a modulated symbol for output.

In the case that RS coding is performed on more than one of the remaining bit-streams that are not subjected to the first coding scheme and there is still a bit-stream obtained from the demultiplexing that is not subjected to any coding bit-stream, it should be understood that a high order modulation is perform directly on the bit-stream that is not subjected to any coding. In other words, the bit-streams obtained from the demultiplexing are divided into three groups: one group is subjected to the first coding scheme, another group is subjected to the second coding scheme, and yet another group is not coded. The high order modulation is performed on the un-coded bit-stream together with the bit-streams subjected to the first coding scheme and the second coding scheme.

Preferably, after step 102, the method may further include step 106 as follows.

In step 106, a puncturing process is performed on the first output data, and then the QAM Quadrature Amplitude Modulation is performed on the punctured data.

Some of the LDPC coded bits are removed by the puncturing process in additional step 106, thereby the transmission rate is improved.

### Second Embodiment

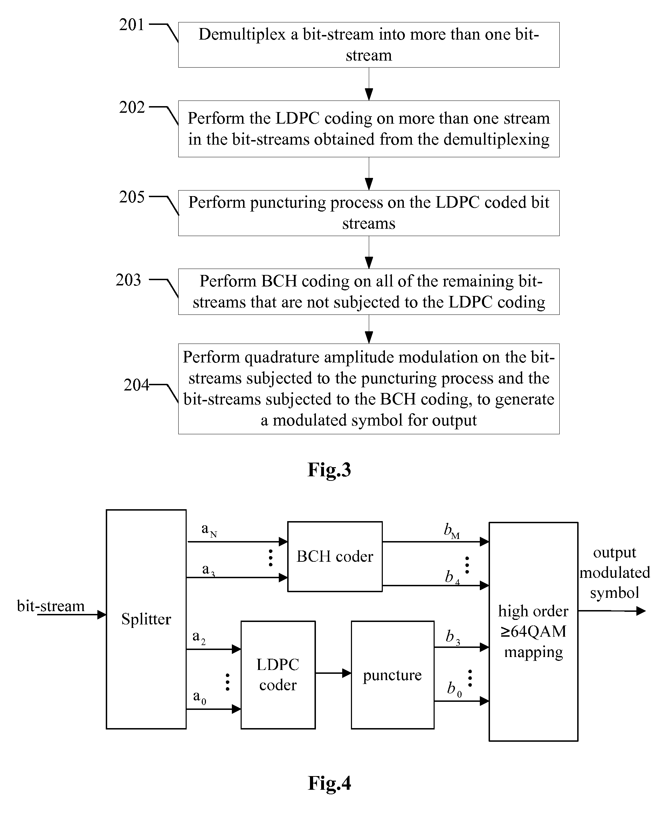

There is provided a code modulation method for a high order modulation in a communication system according to the embodiment of the disclosure. The method is similar to the method according to the first embodiment, only differing in that the first coding scheme and the second coding scheme are embodied exemplarily as the LDPC coding and the BCH coding respectively in the present embodiment. As shown in Fig. 3, the method includes step 201 to step 205 as follows.

In step 201, information to be transmitted is converted into a bit-stream, and the bit-stream is demultiplexed into more than one bit-stream.

In step 202, the LDPC coding is performed on more than one stream in the bit-streams obtained from the demultiplexing.

In step 203, a puncturing process is performed on the LDPC coded bit streams.

In step 204, the BCH coding is performed on all of the remaining bit-streams that are not subjected to the LDPC coding.

In step 205, a quadrature amplitude modulation (QAM) is performed on the bit-streams subjected to the puncturing process and the bit-streams subjected to the BCH coding, to generate a modulated symbol for output.

Referring to Fig. 4, the N bit-streams obtained by demultiplexing the bit-stream are denoted as a₀ to aN. In the case that the coding rate of the present LDPC coder is 3/4, three bit-streams are input into the LDPC coder, which are denoted as a₀ to a₂. A puncturing process is performed on the bit-streams subjected to the LDPC coding, to output four bit-streams b₀ to b₃. The BCH coding is performed on the rest bit-streams a₃ to aN to generate the bit-streams b₄ to b_{M}. Then the bit-streams b₀ to b_{M} are input to a high order quadrature amplitude modulator, to generate a modulated symbol for output.

The high order quadrature amplitude modulation generally refers to a quadrature amplitude modulation with an order equal to or higher than 64.

It should be noted that, the coding rate of 3/4 of the LDPC coder is only an example for a better understanding of the embodiment rather than a limit thereto. The LDPC coder may have another coding rate.

In the method according to the second embodiment of the disclosure, the BCH coding is performed on all of the bit-streams that are not subjected to the LDPC coding. The BCH coding has a better performance on correcting burst errors or random errors and the BCH coding is a channel coding scheme having low complexity, high efficiency and convenient realization. Therefore, compared with the conventional technology, the method has much higher correctness rate of demodulation and transmission efficiency.

It should be noted that the second coding scheme is embodied as the BCH coding in the second embodiment, but the second coding scheme may alternatively be the RS coding. The RS coding may replace the BCH coding in accordance with the existing RS coding rules, and the high order QAM Quadrature Amplitude Modulation may be performed on the bit-stream subjected to the RS coding. The solution with the RS coding is a simple alternation of the second embodiment, which will not be detailed herein.

### Third Embodiment

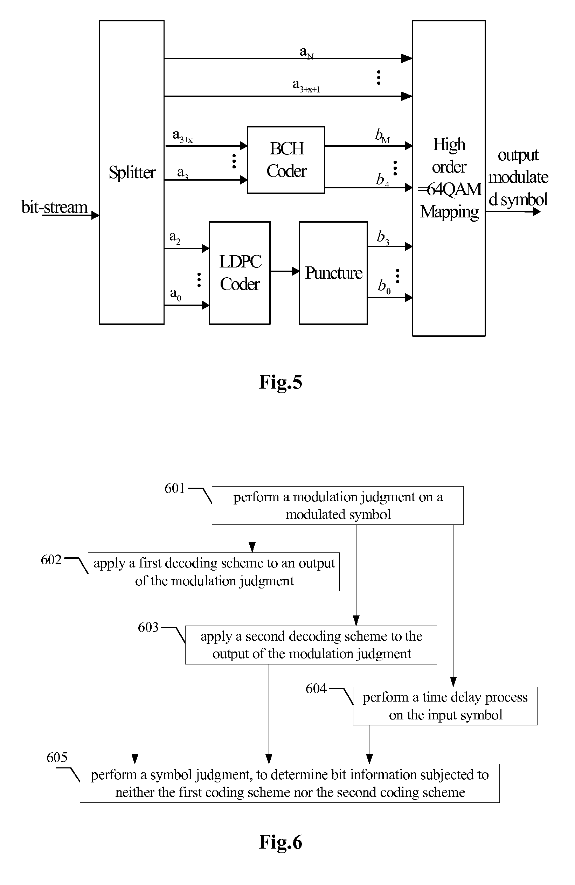

There is provided a code modulation method for a high order modulation in a communication system according to the embodiment of the disclosure. The method is similar to the method according to the second embodiment and is also applied in a communication system, only differing in that the bit-streams to be subjected to a high order QAM include a bit stream that is subjected to neither the first coding scheme nor the second coding scheme. As shown in Fig. 5, in the present embodiment, the first coding scheme is still embodied as the LDPC coding, the puncturing process is still included and the second coding scheme is embodied as the BCH coding or the RS coding. The N bit-streams obtained by demultiplexing a bit stream are denoted as a₀ to aN. In the case that the coding rate of the present LDPC coder is 3/4, three bit-streams are input into the LDPC coder, which are denoted as a₀ to a₂. A puncturing process is performed on the bit-streams subjected to the LDPC coding, to output four bit-streams b₀ to b₃. The BCH coding is performed on the rest bit-streams a₃ to a₃₊ₓ to generate the bit-streams b₄ to b_{M}. Then the bit-streams b₀ to b_{M}, together with the bit-streams a₃₊ₓ₊₁ to aN that are not coded, are input to a high order quadrature amplitude modulator, to be modulated into a modulated symbol for output.

### Fourth Embodiment

There is provided a demodulation method for a high order modulation in a communication system according to the present embodiment of the disclosure. As shown in Fig. 6, the method includes step 601 to step 605 as follows.

In step 601, a modulated symbol representing transmitted information is received, and a demodulation judgment is performed on the modulated symbol.

A result of the demodulation judgment made for the input guaranteeing may be a hard demodulation or a soft demodulation. A first decoding scheme may be applied to the data subjected to the software demodulation, and a second decoding scheme may be applied to the data subjected to the hard demodulation.

In step 602, a first decoding scheme is applied to an output of the demodulation judgment, to obtain bit information to which a first coding scheme was applied.

The first decoding scheme corresponds to the first coding scheme. Specifically, the first decoding scheme may be, for example, the Low Density Parity Check (LDPC) decoding, the convolutional decoding, the Polar decoding, the Turbo decoding, the generalized cascade decoding, or the product decoding. The applicable decoding schemes are not listed exhaustively herein, and any other advanced decoding scheme with high performance may be adopted.

In step 603, a second decoding scheme is applied to an output of the demodulation judgment, to obtain bit information to which a second coding scheme was applied.

The second decoding scheme corresponds to the second coding scheme. Specifically, the second decoding scheme may be, for example, the Boss Chaudhuri-Hocquenghem (BCH) decoding, and/or the Reed-solomon (RS) decoding, and/or other types of decoding with ability for correcting burst errors and a simple implementation.

In step 604, a time delay process is performed on the received modulated symbol.

The time delay process is performed to wait for the output of the corresponding bit information when the first decoding scheme and the second decoding scheme are finished, because the LDPC/BCH/RS decoder may take some time to finish the decoding. The bits subjected to the time delay process are un-coded bits that were subjected to neither the first coding scheme nor the second coding scheme.

In step 605, a symbol judgment is performed on the obtained bit information to which either the first coding scheme or the second coding scheme was applied and the result of the time delay process in accordance with a minimum distance criterion for demodulation, to determine the bit information that was subjected to neither the first coding scheme nor the second coding scheme.

It should to be further noted that, the bit information that was subjected to neither the first coding scheme nor the second coding scheme, refers to the bit information on which neither the first coding scheme nor the RS/BCH coding was performed.

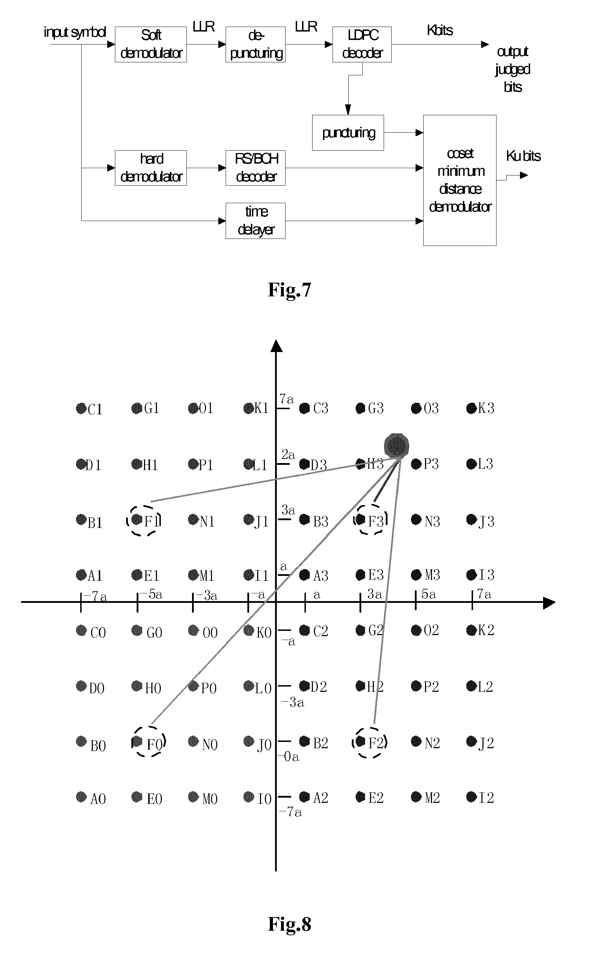

Specifically, according to the minimum distance criterion for demodulation as used in the step 605, one of the constellation points within a judgment region, which has the minimum Euclidean distance to the received symbol, is the final judgment symbol. Referring to Fig. 7, taking 64QAM as an example, it is assumed that 4 bits in the bits subjected to the LDPC coding and sent to a coset-minimum-distance demodulator define a symbol subset F (i.e., judgment region) in a constellation. The symbol subset F is constituted by four symbols. By the coset-minimum-distance demodulator, the Euclidean distance between the received symbol (which is denoted as x+jy in mathematics) and the symbol of each of the four constellation points (which is also denoted as x+jy in mathematics) is calculated, to select the symbol of the constellation point having the smallest Euclidean distance to the received symbol as the final judgment symbol. Then the judgment value of the bits that are not subjected to the first coding scheme is determined based on the final judgment symbol. Referring to Fig. 8, it is assumed that the received symbol is located at the position denoted by the star in the constellation. After the LDPC decoding, the judgment region is determined as the set constituted by F1, F3, F0 and F2. The respective Euclidean distances from the received symbol to F1, F3, F0 and F2 are calculated by the minimum-distance demodulator. As shown in Fig. 8, F3 has the smallest Euclidean distance to the received symbol, and hence F3 is determined as the final judgment symbol. Therefore, the un-coded bits may be determined as the binary value 11 (i.e., the binary value 11 corresponds to decimal value 3), and so far the received symbol is demodulated.

In the method according to the fourth embodiment of the disclosure, the first decoding scheme and the second decoding scheme are applied to the demodulated data. The bit information that was subjected to coding may be obtained by the first decoding scheme, and second-type bit information (which may be taken as bit information that was not coded in the conventional technology) may be demodulated from the bit information that was subjected to coding and the result of the second decoding scheme. The second-type bit information was subjected to the second coding scheme in modulating, therefore, compared with the conventional technology, the method has much higher correctness rate of demodulation and transmission efficiency.

### Fifth Embodiment

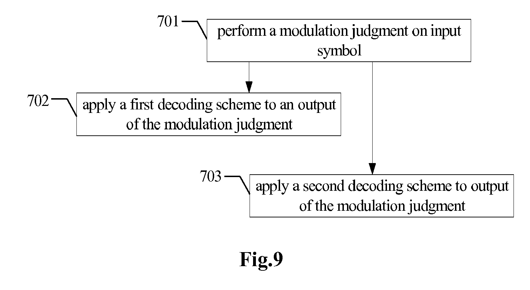

There is provided a demodulation method for a high order modulation in a communication system according to the present embodiment of the disclosure. The method is similar to the method according to the fourth embodiment and is also applied in a communication system, only differing in that the present method is directed to the case that in the code modulation the bit information is divided into two groups: one group is subjected to the first coding scheme, and the other group is subjected to the second coding scheme. Therefore, it is unnecessary to perform a time delay process on the input symbol in the present demodulation method. As shown in Fig. 9, the present method includes step 701 to step 703 as follows.

In step 701, a modulated symbol representing transmitted information is received, and a demodulation judgment is performed on the modulated symbol.

In step 702, a first decoding scheme is applied to an output of the demodulation judgment, to obtain bit information to which a first coding scheme was applied.

In step 703, a second decoding scheme is applied to an output of the demodulation judgment, to obtain bit information to which a second coding scheme was applied.

The step 701 to step 703 will not be detailed herein and reference may be made to step 601 to step 603 in the fourth embodiment.

In the method according to the fifth embodiment of the disclosure, the first decoding scheme and the second decoding scheme are applied to the demodulated data. The bit information that was subjected to coding may be obtained by the first decoding scheme, and second-type bit information (which may be taken as bit information that was not coded in the conventional technology) may be demodulated from the bit information that was subjected to coding and the result of the second decoding scheme. The second-type bit information was subjected to the second coding scheme in modulating, therefore, compared with the conventional technology, the method has much higher correctness rate of demodulation and transmission efficiency.

### Sixth Embodiment

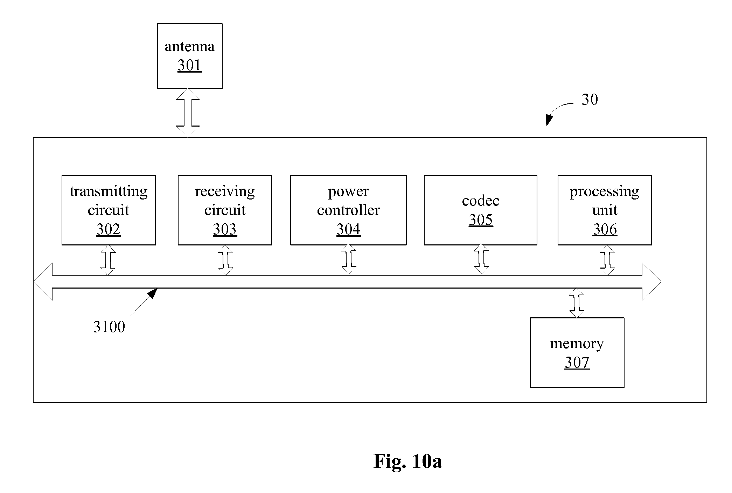

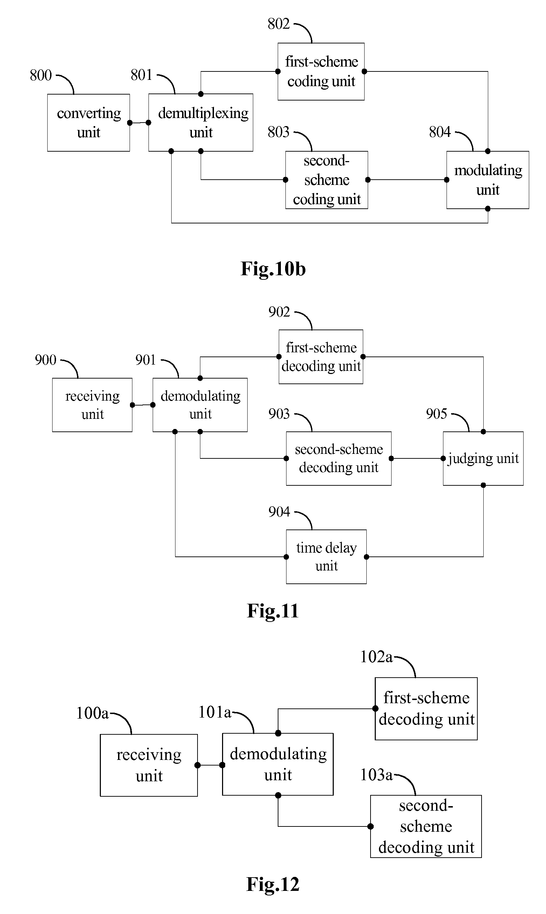

According to the present embodiment of the disclosure, there is further provided an embodiment of an apparatus for implementing the steps and methods according to the above embodiments. The present embodiment may be applied to a base station or a terminal in various communication systems. Fig.10a shows a user device according to an embodiment of the disclosure. According to this embodiment, the device 30 includes a transmitting circuit 302, a receiving circuit 303, a power controller 306, a codec 305, a processing unit 306, a memory 307 and an antenna 301. The processing unit 306, which may also be referred to as CPU, controls the operation of the device 30. The memory 307 may include a Read Only Memory and a Random Access Memory, and may provide instructions and data to the processing unit 306. A part of the memory 307 may further include Non-Volatile Random Access Memory (NVRAM). In practice, the device 30 may be embedded in or may be per se a wireless communication apparatuses, such as a mobile phone, and may further include a body for housing the transmitting circuit 302 and the receiving circuit 303 to enable the transmission and reception of data between the device 30 and a remote device. The transmitting circuit 302 and the receiving circuit 303 may be coupled to the antenna 301. The various components of the apparatus 30 are coupled with each other by a bus system 3100. In addition to a data bus, the bus system 3100 further includes a power bus, a control bus and a state signal bus. For the sake of clarity, various buses are illustrated as the bus system 3100. The device 30 may further include the processing unit 306 for processing signals. In addition, the device 30 may further include the power controller 304 and the codec 305.

The methods disclosed by the above embodiments may be applied to the codec 305, i.e., may be implemented by the codec 305. The codec 305 may be an integrated circuit chip and may process signals. In an implementation, various steps of the above methods may be executed by the integrated logic circuit in form of hardware or instructions in form of software in the codec 305. The processing unit 306 may cooperate with the codec 305 to execute and control the instructions. The codec for implementing the above methods may be a general purpose processor, a Digital Signal processor (DSP), an Application Specific Integrated Circuit (ASIC), a Field Programmable Gate Array (FPGA), or other programmable logic device, discrete gate or transistor logic device, discrete hardware component that may implement or execute the methods, steps and logic block diagrams disclosed by the embodiments of the disclosure. The general purpose processor may be a micro-processor or any other regular processor, decoder or the like.

The steps of the methods disclosed by the embodiment of the disclosure may be executed by the hardware codec, or by the combination of hardware and software modules in the codec. The software modules may be installed in a well-known storage medium, such as a Random Access Memory, a flash memory, a Read Only Memory, a Programmable Read Only Memory or a register. The storage medium is located in the memory 307, and the codec unit read information from the memory 307 to execute the steps of the above methods in cooperation with the hardware.

There is provided a code modulation apparatus for a high order modulation in a communication system according to the present embodiment of the disclosure. Referring to 10b, the apparatus includes a converting unit 800, a demultiplexing unit 801, a first-scheme coding unit 802, a second-scheme coding unit 803, and a modulating unit 804. The modulating unit 804 may be a part of the transmitting circuit, and each of the converting unit 800, the demultiplexing unit 801, the first-scheme coding unit 802, and the second-scheme coding unit 803 may be a part of the codec 305.

The converting unit is configured to convert information to be transmitted into a bit-stream.

The demultiplexing unit is configured to demultiplex the bit-stream into more than one bit-stream.

The first-scheme coding unit is configured to apply a first coding scheme to at least one of the more than one bit-stream to obtain first output data.

Specifically, the first coding scheme includes any one of the Low Density Parity Check coding, the convolutional coding, the Polar coding, the Turbo coding, the generalized concatenated coding, or the product coding.

The second-scheme coding unit is configured to apply a second coding scheme to at least one of the remaining bit-streams that are not subjected to the first coding scheme, to obtain second output data.

Specifically, the second coding scheme is cyclic coding, which at least includes the RS coding and/or BCH coding.

The modulating unit is configured to perform a quadrature amplitude modulation on the first output data and the second output data, to generate a modulated symbol for output.

The modulating unit is further configured to perform a quadrature amplitude modulation on the first and second output data and a bit-stream that is subjected to neither the first coding scheme nor the second coding scheme, to generate a modulated symbol for output, in the case that the bit-stream subjected to neither the first coding scheme nor the second coding scheme is included in the more than one bit-stream.

The apparatus may further include a puncturing unit 805, which is configured to perform a puncturing process on the first output data and input the processed data into the modulating unit. The puncturing unit 805 may be a part of the codec 305.

For more information about the modulation apparatus according to the sixth embodiment, reference may be made to the above detailed description about the modulation methods according to the first embodiment to the fourth embodiment, which will not be detailed herein.

With the code modulation apparatus for a high order modulation in a communication system according to the sixth embodiment of the disclosure, the second coding scheme is applied to some or all of the bit-streams that are not subjected to the first coding scheme. The second coding scheme has a better performance on correcting burst errors and random errors and the second coding scheme is a channel coding scheme having low complexity, high efficiency and convenient realization. Therefore, compared with the conventional technology, the apparatus has much higher correctness rate of demodulation and transmission efficiency.

### Seventh embodiment

There is provided a demodulation apparatus for a high order modulation in a communication system according to the present embodiment of the disclosure. Referring to Fig. 11, the apparatus includes a receiving unit 900, a demodulating unit 901, a first-scheme decoding unit 902, a second-scheme decoding unit 903, a time delay unit 904, and a judging unit 905. The receiving unit 900 may be a part of the receiving circuit 303 in Fig. 10a, and each of the demodulating unit 901, the first-scheme decoding unit 902, the second-scheme decoding unit 903, the time delay unit 904 and the judging unit 905 may be a part of the codec 305.

The receiving unit 900 is configured to receive a modulated symbol representing transmitted information.

The demodulating unit 901 is configured to perform a demodulation judgment on the input symbol.

The first-scheme decoding unit 902 is configured to apply a first decoding scheme to an output of the modulation judgment, to obtain bit information corresponding to the first coding scheme.

Specifically, the first coding scheme includes any one of the Low Density Parity Check coding, the convolutional coding, the Polar coding, and the Turbo coding.

The second-scheme decoding unit 903 is configured to apply a second decoding scheme to an output of the modulation judgment, to obtain bit information corresponding to the second coding scheme.

Specifically, the second coding scheme is cyclic coding, which at least includes the RS coding and/or BCH coding.

The time delay unit 904 is configured to perform a time delay process on the input symbol.

The judging unit 905 is configured to perform, according to a minimum distance criterion for modulation, a symbol judgment on the obtained bit information corresponding to the first coding scheme and the obtained bit information corresponding to the second coding scheme and the result of the time delay process, to determine the bit information corresponding to neither the first coding scheme nor the second coding scheme.

For more information about the demodulation apparatus according to the present embodiment, reference may be made to the demodulation methods according to the fifth embodiment, which will not be detailed herein.

With the demodulation apparatus for a high order modulation in a communication system according to the seventh embodiment of the disclosure, the first decoding scheme and the second decoding scheme are applied to the demodulated data. The bit information subjected to coding may be obtained by the first decoding scheme, and second-type bit information (which may be taken as bit information that was not coded in the conventional technology) may be demodulated from the bit information that was subjected to coding and the result of the second decoding scheme. The second-type bit information was subjected to the second coding scheme in modulating, therefore, compared with the conventional technology, the method has much higher correctness rate of demodulation and transmission efficiency.

### Eighth embodiment

There is provided a demodulation apparatus for a high order modulation in a communication system according to the present embodiment of the disclosure. The present apparatus is similar to the apparatus according to the seventh embodiment and is also applied in a communication system, only differing in that modulated data processed by the present apparatus were obtained from the modulation of data subjected to either the first coding scheme or the second coding scheme, not including those data that were subjected to neither the first coding scheme nor the second coding scheme. Therefore, the present apparatus is unnecessary to include a time delay unit in the seventh embodiment.

Referring to Fig. 12, the apparatus includes a receiving unit 100a, a demodulating unit 101a, a first-scheme decoding unit 102a, and a second-scheme decoding unit 103a. The receiving unit 100a may be a part of the receiving circuit 303 in Fig. 10a. Each of the demodulating unit 101a, the first-scheme decoding unit 102a and the second-scheme decoding unit 103a may be a part of the codec 305.

The demodulating unit 101a is configured to perform a demodulation judgment on an input symbol.

The first-scheme decoding unit 102a is configured to apply a first decoding scheme to an output of the modulation judgment, to obtain bit information corresponding to a first coding scheme.

Specifically, the first coding scheme includes any one of the Low Density Parity Check coding, the convolutional coding, the Polar coding, and the Turbo coding.

The second-scheme decoding unit 103a is configured to apply a second decoding scheme to an output of the modulation judgment, to obtain bit information corresponding to a second coding scheme.

Specifically, the second coding scheme is cyclic coding, which at least includes the RS coding and/or BCH coding.

With the demodulation apparatus for a high order modulation in a communication system according to the eighth embodiment of the disclosure, the first decoding scheme and the second decoding scheme are applied to the demodulated data. The bit information that was subjected to coding may be obtained by the first decoding scheme, and second-type bit information (which may be taken as bit information that was not coded in the conventional technology) may be obtained by demodulating the bit information that was subjected to coding and the result of the second decoding scheme. The second-type bit information was subjected to the second coding scheme in modulating, therefore, compared with the conventional technology, the method has much higher correctness rate of demodulation and transmission efficiency.

It can be understood by those skilled in the art that all or some of steps in the methods according to the above embodiments may be implemented by hardware instructed by a program. The program may be stored in a computer-accessible storage medium, which may be a readable/writable memory, a magnetic disk or an optical disk, a Field Programmable Gate Array FPGA, a Digital Signal Processor DSP, a Central Processing Unit CPU and the like.

## Claims

1. A code modulation method for a high order modulation in a communication system, comprising:
converting information to be transmitted into a bit-stream, and demultiplexing the bit-stream into more than one bit-stream;
applying a first coding scheme to at least one of the more than one bit-stream to obtain first output data, and applying a second coding scheme to at least one of the bit-streams that are not subjected to the first coding scheme to obtain second output data, wherein the second coding scheme is a cyclic coding; and
performing a quadrature amplitude modulation on the first output data and the second output data, to generate a modulated symbol for output.

2. The method according to claim 1, wherein if the more than one bit-stream obtained from the demultiplexing comprises any bit stream that is subjected to neither the first coding scheme nor the second coding scheme, the method further comprises:
performing the quadrature amplitude modulation on the first output data, the second output data and the bit-stream that is subjected to neither the first coding scheme nor the second coding scheme, to generate the modulated symbol for output.

3. The method according to claim 1, wherein the first coding scheme comprises any one of low density parity check coding, convolutional coding, Polar coding, Turbo coding, generalized concatenated coding, and product coding.

4. The method according to claim 1, wherein the second coding scheme is a cyclic coding that at least comprises Reed-Solomon coding or the Boss Chaudhuri-Hocquenghem coding.

5. The method according to claim 1, after obtaining the first output data, the method further comprising:
performing a puncturing process on the first output data and performing the quadrature amplitude modulation on the punctured data.

6. A demodulation method for a high order modulation in a communication system, comprising:
receiving a modulated symbol representing transmitted information and performing a demodulation judgment on the modulated symbol;
applying a first decoding scheme to an output of the demodulation judgment, to obtain bit information corresponding to a first coding scheme;
applying a second decoding scheme to the output of the demodulation judgment, to obtain bit information corresponding to a second coding scheme, wherein the second coding scheme is a cyclic coding;
performing a time delay process on the input symbol; and
performing, in accordance with a minimum distance criterion for demodulation, a symbol judgment on the obtained bit information corresponding to the first coding scheme, the obtained bit information corresponding to the second coding scheme and the result of the time delay process, to determine bit information corresponding to neither the first coding scheme nor the second coding scheme.

7. The demodulation method according to claim 6, wherein the first coding scheme comprises any one of low density parity check coding, convolutional coding, Polar coding, Turbo coding, generalized concatenated coding, and product coding.

8. The demodulation method according to claim 6, wherein the second coding scheme is the cyclic coding that at least comprises Reed-Solomon coding or Boss Chaudhuri-Hocquenghem coding.

9. A demodulation method for a high order modulation in a communication system, comprising:
receiving a modulated symbol representing transmitted information and performing a demodulation judgment on the modulated symbol;
applying a first decoding scheme to an output of the demodulation judgment, to obtain bit information corresponding to a first coding scheme; and
applying a second decoding scheme on the output of the demodulation judgment, to obtain bit information corresponding to a second coding scheme, wherein the second coding scheme is a cyclic coding.

10. The demodulation method according to claim 9, wherein the first coding scheme comprises any one of low density parity check coding, convolutional coding, Polar coding, Turbo coding, generalized concatenated coding, and product coding.

11. The demodulation method according to claim 9, wherein the second coding scheme is the cyclic coding that at least comprises Reed-Solomon coding or Boss Chaudhuri-Hocquenghem coding.

12. A code modulation apparatus for a high order modulation in a communication system, the apparatus comprising a converting unit, a demultiplexing unit, a first-scheme coding unit, a second-scheme coding unit and a modulating unit; wherein
the converting unit is configured to convert information to be transmitted into a bit-stream;
the demultiplexing unit is configured to demultiplex the bit-stream into more than one bit-stream;
the first-scheme coding unit is configured to apply a first coding scheme to at least one of the more than one bit-stream to obtain first output data;
the second-scheme coding unit is configured to apply a second coding scheme to at least one of the bit-streams that are not subjected to the first coding scheme, to obtain second output data, wherein the second coding scheme is a cyclic coding; and
the modulating unit is configured to perform a quadrature amplitude modulation on the first output data and the second output data, to generate a modulated symbol for output.

13. The method according to claim 12, wherein if the more than one bit-stream obtained from the demultiplexing comprises any bit stream that is subjected to neither the first coding scheme nor the second coding scheme, the modulating unit is further configured to perform the quadrature amplitude modulation on the first output data, the second output data and the bit-stream that is subjected to neither the first coding scheme nor the second coding scheme, to generate the modulated symbol for output.

14. The apparatus according to claim 12, wherein the first coding scheme comprises any one of low density parity check coding, convolutional coding, Polar coding, Turbo coding, generalized concatenated coding, and product coding.

15. The apparatus according to claim 12, wherein the second coding scheme is a cyclic coding that at least comprises Reed-Solomon coding or Boss Chaudhuri-Hocquenghem coding.

16. The apparatus according to claim 12, further comprising:
a puncturing unit, configured to perform a puncturing process on the first output data and input the punctured data to the modulating unit.

17. A demodulation apparatus for a high order modulation in a communication system, comprising a receiving unit, a demodulating unit, a first-scheme decoding unit, a second-scheme decoding unit, a time delay unit, and a judging unit, wherein
the receiving unit is configured to receive a modulated symbol representing transmitted information;
the demodulating unit is configured to perform a demodulation judgment on the modulated symbol;
the first-scheme decoding unit is configured to apply a first decoding scheme to an output of the modulation judgment, to obtain bit information corresponding to a first coding scheme;
the second-scheme decoding unit is configured to apply a second decoding scheme to the output of the modulation judgment, to obtain bit information corresponding to a second coding scheme, wherein the second coding scheme is a cyclic coding;
the time delay unit is configured to perform a time delay process on the input symbol; and
the judging unit is configured to perform, in accordance with a minimum distance criterion for demodulation, a symbol judgment on the obtained bit information corresponding to the first coding scheme, the obtained bit information corresponding to the second coding scheme and the result of the time delay process, to determine the bit information corresponding to neither the first coding scheme nor the second coding scheme.

18. The demodulation apparatus according to claim 17, wherein the first coding scheme comprises any one of low density parity check coding, convolutional coding, Polar coding, Turbo coding, generalized concatenated coding, and product coding.

19. The demodulation apparatus according to claim 17, wherein the second coding scheme is the cyclic coding that at least comprises Reed-Solomon coding or Boss Chaudhuri-Hocquenghem coding.

20. A demodulation apparatus for a high order modulation in a communication system, comprising a receiving unit, a demodulating unit, a first-scheme decoding unit, and a second-scheme decoding unit, wherein
the receiving unit is configured to receive a modulated symbol representing transmitted information;
the demodulating unit is configured to perform a demodulation judgment on the modulated symbol;
the first-scheme decoding unit is configured to apply a first decoding scheme to an output of the modulation judgment, to obtain bit information corresponding to a first coding scheme; and
the second-scheme decoding unit is configured to apply a second decoding scheme to the output of the modulation judgment, to obtain bit information corresponding to a second coding scheme, wherein the second coding scheme is a cyclic coding.

21. The demodulation method according to claim 20, wherein the first coding scheme comprises any one of low density parity check coding, convolutional coding, Polar coding, Turbo coding, generalized concatenated coding, and product coding.

22. The demodulation method according to claim 20, wherein the second coding scheme is the cyclic coding that at least comprises Reed-Solomon coding or Boss Chaudhuri-Hocquenghem coding.
